Europäisches Patentamt

European Patent Office

Office européen des brevets

(19)

(11) Numéro de publication: **0 237 693**
**A1**

(12) **DEMANDE DE BREVET EUROPEEN**

(21) Numéro de dépôt: 86870036.0

(22) Date de dépôt: 21.03.86

(51) Int. Cl.³: **A 61 C 17/032**

(43) Date de publication de la demande:
23.09.87 Bulletin 87/39

(84) Etats contractants désignés:
BE CH DE FR GB IT LI LU NL

(71) Demandeur: **Catracchia, Ambrogio**
**219 14e Avenue**
**Grande Côte St Eustache J7P4B4 Mtl. PQ(CA)**

(72) Inventeur: **Catracchia, Ambrogio**
**219 14e Avenue**
**Grande Côte St Eustache J7P4B4 Mtl. PQ(CA)**

(74) Mandataire: **Dellicour, Paul**
**Office de Brevets E. Dellicour rue Fabry 18/012**
**B-4000 Liège(BE)**

(54) **Gicleur pour le nettoyage des dents et des appareils dentaires.**

(57) Le gicleur est constitué d'un corps d'appareil (1) sur lequel sont montés, d'une part, un élément de raccordement (4) à un robinet d'alimentation d'eau (9) et, d'autre part, un embout (6) ou gicleur proprement dit, la liaison à travers ledit corps (1) entre ledit élément (4) et ledit embout (6) étant réalisée par l'intermédiaire d'un réservoir à bain de bouche (17).

Le réservoir de bain de bouche (17) est monté sur le corps d'appareil (1) par l'intermédiaire d'une bague de liaison ou bague de lévitation (16) formant bouchon, dans la tête de laquelle plonge une tige de pression (13) avec soupape (12) et de laquelle fait saillie un petit tuyau (18) à fin conduit (19) plongeant, d'une part, dans le réservoir de bain de bouche (17) et relié, d'autre part, au conduit de sortie (3) du corps d'appareil (1), ledit tuyau (18) comportant un petit canal (20) mettant en liaison le fin conduit et l'intérieur de la bague de lévitation (16).

EP 0 237 693 A1

./...

Croydon Printing Company Ltd.

FIG.1

1

## Gicleur pour le nettoyage des dents et des appareils dentaires

La présente invention concerne le nettoyage des dents et des appareils dentaires et est relative à un appareil gicleur destiné à diriger de l'eau pulsée le long de toutes les surfaces des dents ou sur des prothèses.

Les appareils connus de ce type comportent un réservoir à eau avec pompe et font appel à une source de courant, soit à partir du réseau, soit à partir d'une batterie rechargeable. Dans de tels appareils l'usage de solutions salines ou de bains de bouche risquent d'endommager la pompe.

Un objet de l'invention est de réaliser un appareil gicleur de conception très simple et d'une grande facilité d'usage.

Un autre objet de l'invention consiste à conformer l'appareil gicleur de manière à rendre très aisée et sans danger pour l'appareil l'utilisation de solutions spécialement appropriées pour le nettoyage des dents, le renforcement des gencives ou l'entretien de prothèses.

Pour atteindre les buts recherchés un appareil gicleur conforme à l'invention est caractérisé en ce qu'il est constitué d'un corps d'appareil sur lequel sont montés, d'une part, un élément de raccordement à un robinet d'alimentation d'eau et, d'autre part, un embout ou gicleur proprement dit, la liaison à travers ledit corps entre ledit élément et ledit embout étant réalisée par l'intermédiaire d'un réservoir à bain de bouche.

Suivant l'invention le corps de l'appareil comporte un conduit d'entrée destiné à venir en liaison avec le conduit de l'élément de raccordement au robinet et un conduit de sortie destiné à venir en liaison avec le conduit de l'embout, ces deux conduits de l'appareil étant en forme de L renversé et aboutissant au sommet du réservoir de bain de bouche.

Pour mieux faire comprendre l'invention celle-ci est décrite maintenant avec plus de détails sur la base des dessins annexés, à titre d'exemple uniquement, montrant en :

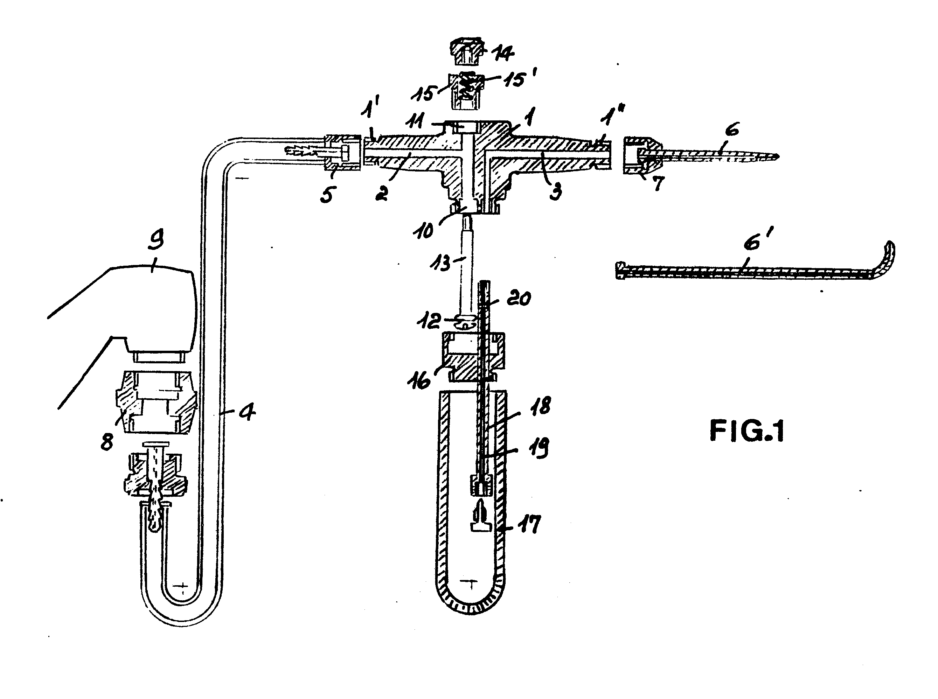

Figure 1 un éclaté des diverses pièces formant un appareil gicleur conforme à l'invention ;

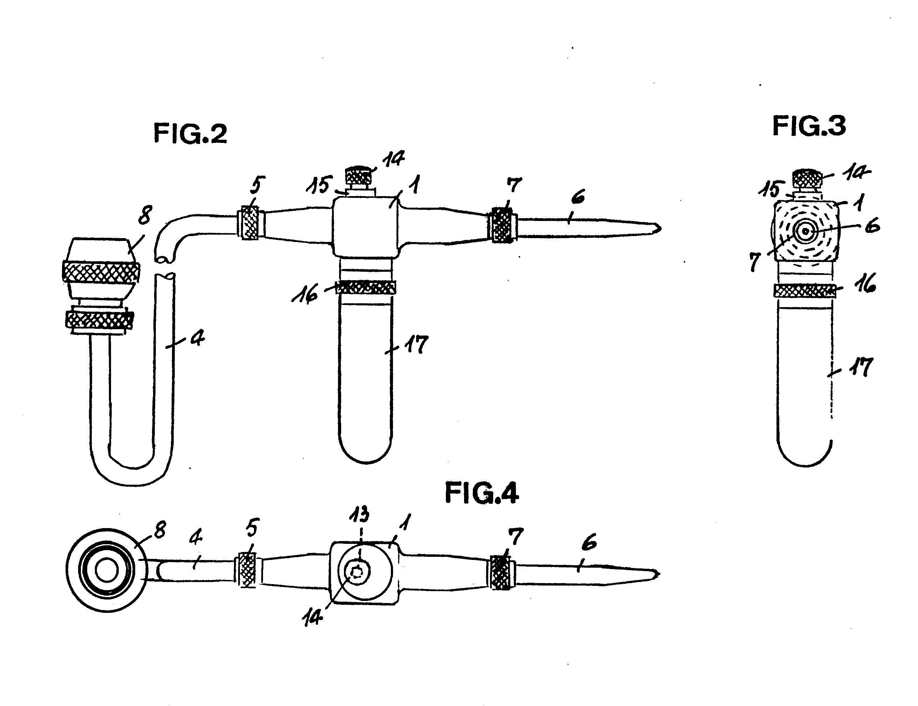

Figure 2 une vue en élévation de profil de l'appareil gicleur de figure 1 ;

Figure 3 une vue en élévation de face, et

Figure 4 une vue en plan dudit appareil gicleur.

Comme on le voit aux dessins, un appareil gicleur suivant l'invention est constitué d'un corps 1 pourvu d'un conduit d'entrée 2 et d'un conduit de sortie 3. Ces conduits 2 et 3, substantiellement en forme de L, aboutissent tous deux côte à côte à la base dudit corps.

Les extrémités 1' et 1" du corps 1, correspondant à l'entrée et à la sortie, sont filetées pour recevoir l'une l'extrémité d'un tuyau flexible 4 avec sa bague filetée libre 5 et l'autre un embout ou gicleur proprement dit droit 6 ou recourbé 6' avec sa bague filetée libre 7.

Le tuyau flexible 4 porte à son autre extrémité une bague filetée libre 8 destinée à se fixer à la tête d'un robinet 9.

La branche verticale du conduit 2 débouche à la base du corps 1 par une cavité 10 et se prolonge au-delà de la branche horizontale jusqu'à la partie supérieure dudit corps où elle débouche dans une cavité 11. La cavité 10 sert de siège de soupape et est destinée à recevoir la soupape 12 d'une tige à pression 13 faisant saillie au-delà de la cavité 11 pour recevoir un bouton presseur 14 monté dans une bague 15 avec ressort 15'.

La base du corps 1 est filetée pour venir en prise avec une bague filetée 16 dite bague de lévitation formant bouchon pour un réservoir 17 destiné à recevoir une solution appropriée au nettoyage des dents ou de prothèses. Dans ce réservoir plonge un petit tuyau 18 à très fin conduit 19, tuyau qui fait saillie dans le bouchon 16 pour être relié à la base du corps 1 dans l'embouchure de la partie verticale du conduit de sortie 3. Le tuyau 18 comporte un petit canal 20 qui met en liaison par la bague de lévitation 16 le conduit d'entrée 2 et, par l'intermédiaire du conduit 19, le conduit de sortie 3.

Le fonctionnement d'un appareil gicleur suivant l'invention est très simple. Les bagues 8 et 5 étant montées respectivement sur le robinet 9 et sur le corps 1 côté entrée, la bague 7 avec l'embout choisi sur le corps 1 côté sortie et la bague de lévitation 16 sur la base dudit corps avec son réservoir 17, rempli de la solution appropriée, après raccordement du petit tuyau 20, on ouvre le robinet 9 pour que l'eau sous pression arrive dans le corps 1, plus précisément dans le conduit 2.

Pour mettre l'appareil en marche, il suffit alors de presser, avec un doigt de la main tenant l'appareil par le réservoir 17 servant de manche, le bouton 14 qui en comprimant le ressort 15' va abaisser la soupape 12 et amener l'eau sous pression du conduit 2 dans la bague 16 et par le canal 20 dans le conduit 3, où l'eau pulsée chargée de la solution entraînée avec elle par le conduit 19 pourra être dirigée à travers le gicleur 6 ou 6' sur toute la surface des dents et particulièrement dans les endroits habituellement difficiles à atteindre avec d'autres moyens ou sur toute la surface d'un appareil dentaire enlevé de la bouche.

Grâce au bouton presseur 14 le jet peut être interrompu aisément, puisqu'il suffit de relâcher ledit bouton, le ressort 15' ramenant la soupape 12 sur son siège.

Revendications

1. Gicleur pour le nettoyage des dents et des appareils dentaires, caractérisé en ce qu'il est constitué d'un corps d'appareil (1) sur lequel sont montés, d'une part, un élément de raccordement (4) à un robinet d'alimentation d'eau (9) et, d'autre part, un embout (6) ou gicleur proprement dit, la liaison à travers ledit corps (1) entre ledit élément (4) et ledit embout (6) étant réalisée par l'intermédiaire d'un réservoir à bain de bouche (17).

2. Gicleur suivant la revendication 1, caractérisé en ce que le corps d'appareil (1) comporte un conduit d'entrée (2) destiné à venir en liaison avec le conduit de l'élément de raccordement (4) au robinet (9) et un conduit de sortie (3) destiné à venir en liaison avec le conduit de l'embout (6), ces deux conduits (2,3) de l'appareil étant en forme de L renversé et aboutissant au sommet du réservoir de bain de bouche (17).

3. Gicleur suivant la revendication 1, caractérisé en ce que le réservoir de bain de bouche (17) est monté sur le corps d'appareil (1) par l'intermédiaire d'une bague de liaison ou bague de lévitation (16) formant bouchon, dans la tête de laquelle plonge une tige de pression (13) avec soupape (12) et de laquelle fait saillie un petit tuyau (18) à fin conduit (19) plongeant, d'une part, dans le réservoir de bain de bouche (17) et relié, d'autre part, au conduit de sortie (3) du corps d'appareil (1), ledit tuyau (18) comportant un petit canal (20) mettant en liaison le fin conduit et l'intérieur de la bague de lévitation (16).

4. Gicleur suivant la revendication 3, caractérisé en ce que la tige de pression à soupape (12,13) est commandée par un bouton à ressort (14) monté à l'extérieur
du corps d'appareil (1).

5. Gicleur suivant la revendication 1, caractérisé en
ce que l'élément de raccordement au robinet consiste en
un tuyau flexible (4) portant à chaque extrémité une
bague de raccordement (5,8).

FIG.1

FIG.2

FIG.3

FIG.4

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | DE-A-2 740 033 (DEMEROUTIS) <br> * Figure 1; page 5, lignes 5-9,16-25 * | 1,5 | A 61 C 17/032 |
| Y | | 2-4 | |
| Y | DE-C- 831 868 (DRÄGER) <br> * Figure 1; page 2, lignes 74-94 * | 2-4 | |
| Y | US-A-4 149 315 (PAGE) <br> * Figures 4-6; colonne 4, lignes 26-50 * | 3,4 | |
| X | FR-A-2 203 276 (BOISSY) <br> * Figures; page 3, lignes 6-31 * | 1 | |
| A | FR-A- 558 763 (FRENG) <br> * Figure 4; page 2, lignes 28-44 * | 1-3 | DOMAINES TECHNIQUES RECHERCHES (Int Cl 4) <br> A 61 C |

Le present rapport de recherche a été établi pour toutes les revendications

| Lieu de la recherche <br> LA HAYE | Date d'achèvement de la recherche <br> 07-11-1986 | Examinateur <br> JONES T.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82